# EUROPEAN PATENT APPLICATION

(11) **EP 4 186 746 A1**
(43) Date of publication of application: **31.05.2023**
(21) Application number: 21211236.1
(22) Date of filing: 30.11.2021
(51) Int. Cl.: B60L 58/21, B60L 58/22

(54) **BATTERY SYSTEM AND METHOD FOR OPERATING THE SAME**

(71) Applicant: Samsung SDI Co., Ltd., Yongin-si, Gyeonggi-do 17084 (KR)
(72) Inventor: Fritz, Jürgen, 8020 Graz (AT); Kurcik, Peter, 8505 St. Nikolai im Sausal (AT); Trathnigg, Thomas, 8010 Graz (AT); Mandic, Renato, 8010 Graz (AT); Haindl, Michael, 8230 Hartberg (AT); Srinivas, Pramod, 8010 Graz (AT)
(74) Representative: Gulde & Partner

(57) **Abstract**

A battery system (10) is disclosed comprising a power source (20) and a battery management system (30) including a DC/DC converter (32) and a system basis chip, SBC (40). The DC/DC converter (32) is electrically connected to the power source (20) to receive power from the power source (20) and configured to output an output voltage. The SBC (40) is electrically connected in series with the DC/DC converter (32) to receive the output voltage from the DC/DC converter (32). A microcontroller (50) is connected to the SBC (40) to receive power from the SBC (40). A relay driver (60) is configured to control at least one relay (62, 64), wherein the relay driver (60) is connected to an output node (34) of the DC/DC converter (32) which is interconnected between the SBC (40) and the DC/DC converter (32) to receive the output voltage from the DC/DC converter (32). The microcontroller (50) is electrically connected to the relay driver (60) and configured to: before switching the at least one relay (62, 64), control the DC/DC converter (32) to increase the output voltage from a first voltage (V1) to a second voltage (V2) higher than the first voltage (V1); and control the relay driver (60) to switch the at least one relay (62, 64) while the second voltage is outputted by the DC/DC converter (32).

## Description

### Field of the Disclosure

The present disclosure relates to a battery system. Further, the present invention is directed to a vehicle and a stationary energy storage system with such battery system. A further aspect of the present invention is directed to a method for operating the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series *(XpYs)* or multiple cells connected in series that are connected in parallel *(XsYp).*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

There are several concepts for powering the BMS and in particular its high power/voltage relays in vehicle applications, i.e. xEV applications, and also for stationary storage systems, ESS.

According to the state of the art, the BMS can for example be directly supplied by 12V or 24V using a DC/DC converter and a microcontroller with a local 5V/3.3V supply. Relays are either controlled by a pulse width modulation, PWM, controller for optimized power consumption or by a constant voltage supply.

In further examples a dedicated system basis chip, SBC, is used for supplying the microcontroller with local 5V/3.3V supply. Other examples teach that the BMS is directly supplied by 12V or 24V but with buck/boost converter that generates constant 12V for relays and the further power consumers of the BMS, e.g. system basic chip, SBC, a microcontroller, MCU, and others. In a further example, a stationary ESS system has typically a constant industrial 24V power supply. In such applications high power relays are used which are powered directly with such 24V supply voltage. In all these cases of the state of the art, the relay is either controlled by a PWM controller or supplied with constant supply voltage.

In general, if PWM or a constant voltage has to be used for the relay control, substantial heat is generated inside the relays. At least temporarily these relays are on the edge of their maximum self-heating caused by the external supply current and ambient temperature profiles. Then, a PWM control has to be used to minimize self-heating caused by the current through the coil, since otherwise a larger relay would have to be selected which however increases the overall costs significantly. A PWM control, on the other hand, makes the relay drivers more complex and more expensive. Further, additional measures for establishing electromagnetic compatibility, EMC, are needed in such case. Without such PWM control a certain power is unnecessarily converted into heat inside the relays. Further, in addition to the above, a BMS for a stationary ESS system was always a different PCB than a BMS for a xEV battery pack.

Therefore, a battery system needs to be developed which overcomes at least some of the reported deficiencies, in particular having reduced power consumption, reducing unnecessary heat generation and less costs involved.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is proposed. The battery system comprises a power source. Further, the battery system comprises a battery management system including a DC/DC converter and a system basis chip, SBC. The DC/DC converter is electrically connected to the power source to receive power from the power source and configured to output an output voltage. Further, the SBC is electrically connected in series with the DC/DC converter to receive the output voltage from the DC/DC converter. Further, a microcontroller is connected to the SBC to receive power from the SBC. Further, a relay driver is configured to control at least one relay, wherein the relay driver is connected to an output node of the DC/DC converter which is interconnected between the SBC and the DC/DC converter. The microcontroller is electrically connected to the relay driver and configured to: before switching the at least one relay, control the DC/DC converter to increase the output voltage from a first voltage to a second voltage higher than the first voltage; and control the relay driver to switch the at least one relay while the second voltage is outputted by the DC/DC converter.

In a further aspect a vehicle and a stationary energy storage system comprising the battery system are disclosed. Thus, this concept is also applicable for stationary systems.

Yet according to another aspect of the present disclosure, a method for operating the battery system as cited above is disclosed comprising the steps of: before switching the at least one relay, control, by the microcontroller, the DC/DC converter to increase the output voltage from a first voltage to a second voltage higher than the first voltage. In a further step the method comprises to control the relay driver, by the microcontroller, to switch the at least one relay while the second voltage is outputted by the DC/DC converter.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 illustrates a battery system according to an embodiment of the invention; and
Fig. 2 illustrates a method for operating the battery system according to an embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof. In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is proposed. The battery system comprises a power source. Further, the battery system comprises a battery management system including a DC/DC converter and a system basis chip, SBC. The DC/DC converter is electrically connected to the power source to receive power from the power source and configured to output an output voltage. Further, the SBC is electrically connected in series with the DC/DC converter to receive the output voltage from the DC/DC converter. Further, a microcontroller is connected to the SBC to receive power from the SBC. Further, a relay driver is configured to control at least one relay, wherein the relay driver is connected to an output node of the DC/DC converter which is interconnected between the SBC and the DC/DC converter. The microcontroller is electrically connected to the relay driver and configured to: before switching the at least one relay, control the DC/DC converter to increase the output voltage from a first voltage to a second voltage higher than the first voltage; and control the relay driver to switch the at least one relay while the second voltage is outputted by the DC/DC converter.

A system basis chip is an integrated circuit which can supply several consumers with various supply voltages according to their power need. For example, the SBC can provide the microcontroller with stable operating voltage of between 3.3 V or 5 V. The microcontroller may have also different voltage supply levels for example within the cited range. The SBC is very robust with respect to variations in voltage input, such that the SBC can stably function despite of an increase in output voltage of the DC/DC converter during switching. The properties of the BMS can be inferred from the introduction. The DC/DC converter and the SBC together form a power supply on the BMS. DC/DC converter and SBC are integrated on a printed circuit board. The power source may be an external power source, for example a boardnet voltage originating from a battery, for example providing 12V or 24 V. The power source may be a constant, i.e. regulated, DC supply, e.g. providing 24 V. The DC/DC converter includes a buck and/or boost functionality such that the output voltage of the DC/DC converter is tunable at least between two voltages. The microcontroller typically requires 3.3 V or 5 V. The relays may be configured to switch a terminal voltage of a battery and/or battery pack. The switching may comprise a closing and/or an opening operation. Before switching the at least one relay may be in other words that the microcontroller identifies that a switching of the at least one relay needs to be performed.

The invention is based on the insight that for the switching operation of the at least one relay a higher supply voltage is required but not for holding or keeping of a distinct relay state. Before the switching operation is performed, the output voltage is therefore increased. A PWM modulation controller is not required and also an unnecessary high voltage supply is circumvented thereby reducing costs and power consumption. Furthermore, the system base chip is robust with respect to changes in input voltage, such that it can still function during a switching operation. The advantage of the present invention is that the supply of higher voltage to the relay driver based on whether there is an actual switching operation leads to a reduced power consumption and also to a reduced self-heating, since before switching the relay a lower voltage is supplied and only for the switching operation this voltage is increased. Further, relay driver design is less complex compared to PWM and no EMC measures need to be provided.

The microcontroller may be configured to: control the DC/DC converter to output the second voltage until the at least one relay is switched; and control the DC/DC converter to reduce the output voltage from the second voltage to the first voltage in response to when the switching of the at least one relay is completed. This implies that only a transient/temporary increase of the voltage is generated and the first voltage being lower than the second voltage is supplied again as soon as the switching operation is completed. Thus, reduced effective power consumption and heating is achieved.

The battery system may further comprise at least one additional power consumer which is electrically connected to an output node of the SBC to receive the output voltage from the SBC. Thus, these power consumers are not affected by the temporary voltage increase, since the SBC provides a robust voltage output despite of variations in the DC/DC output during switching.

The first voltage may be lower than a minimum voltage required to switch the at least one relay.

In this case, the power consumption is reduced since the supply voltage is a reduced voltage for most times apart from the transient time windows in which the switching operation is performed.

The first voltage may be lower than a minimum voltage required to switch the at least one relay. Thereby, power consumption is reduced since in operating times other than where the switching occurs, i.e. where the relays are kept open or closed, the power supply is reduced. Thus, also the effect of self-heating is minimized.

The second voltage may be equal or higher than a minimum voltage required to switch the at least one relay. The second voltage may be set to be close to the minimum voltage required to switch the at least one relay to reduce power consumption. A second voltage, for example, may be between 10V and 12V.

The first voltage may be equal or higher than a minimum operating voltage of the microcontroller. The first voltage may guarantee that the microcontroller can still be sufficiently supplied and that the SBC is still working. For example, a first voltage may be between 6V and 8V.

In a further aspect, a vehicle may comprise the battery system. In yet another aspect, as well a stationary energy storage system may comprise the battery system.

In yet another aspect, a method for operating the battery system according to the present disclosure is disclosed, wherein the method comprises the steps of: before switching the at least one relay, control, by the microcontroller, the DC/DC converter to increase the output voltage from a first voltage to a second voltage higher than the first voltage. In a further step the method includes to control the relay driver, by the microcontroller, to switch the at least one relay while the second voltage is outputted by the DC/DC converter. The advantages are the same as described above.

The method may further comprise to control, by the microcontroller, the DC/DC converter to output the second voltage until the at least one relay is switched. Further the method comprises to control, by the microcontroller, the DC/DC converter to reduce the output voltage from the second voltage to the first voltage in response to when the switching of the at least one relay is completed. This implies that only a transient/temporary increase of the voltage is generated and the first voltage being lower than the second voltage is supplied as soon as the switching operation is completed. Thus, reduced effective power consumption is achieved.

### Specific Embodiments

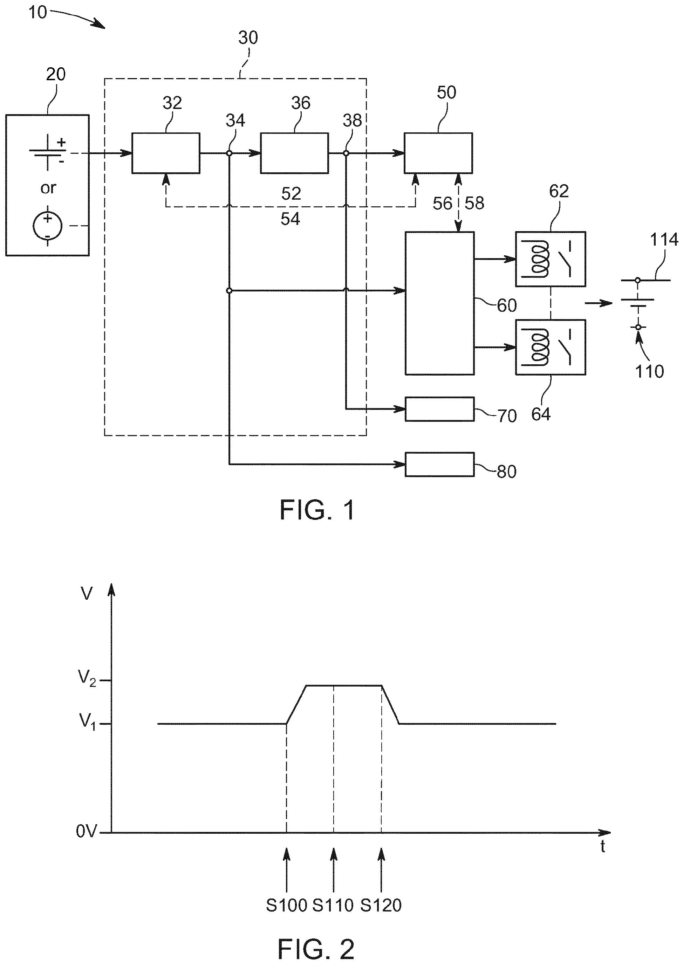

Fig. 1 illustrates a battery system 10 according to an embodiment of the invention.

The battery system 10 comprises a battery management system 30, BMS. The BMS 30 includes a DC/DC converter 32 and a system basis chip 36, SBC. The DC/DC converter 32 and the SBC 36 together form a power supply on the BMS 30 to supply power to the various power consumers 50, 70, 80 as explained below. The DC/DC converter 32 and the SBC 36 are integrated on one circuit board.

The DC/DC converter 32 is therefore electrically connected to a power source 20 to receive power from the power source 20. The power source 20 can be for example a board net voltage providing for example a voltage of 12V or 24V as input voltage to the DC/DC converter 32. The board net voltage is generated by a battery as for example a lead-acid battery. In particular, when a battery with 24V output is used, voltage fluctuations with voltage peaks up to 60V can occur such that the DC/DC converter 32 is needed. In other examples, the power source 20 can be a constant, i.e. regulated, DC supply providing for example 24 V, but the invention is not restricted thereto.

The DC/DC converter 32 is configured to convert an input voltage which is input to the DC/DC converter 32 to an output voltage. In particular, the DC/DC converter 32 can be controlled, by a microcontroller 50, to output at least two different output voltages as explained further below. The DC/DC converter 32 includes a controllable buck and/or boost functionality. This controllable buck and/or boost functionality can be controlled by the microcontroller 50 through a control line 52. Further, a diagnosis line 54 may be provided to transmit signals indicative of the operation state of the DC/DC converter 32 to the microcontroller 50.

The SBC 36 is electrically connected in series with the DC/DC converter 32 to receive the output voltage from the DC/DC converter 32. Therefore, the output voltage serves as a power supply for the SBC 36. The SBC 36 supplies various power consumers 50, 70 with a stable power supply based on the power needs of the particular power consumer 50, 70.

A microcontroller 50 is connected to the SBC 36 to receive power from the SBC 36. The SBC 36 may provide a power between 3.3 and 5 V to the microcontroller 50. Thus, the microcontroller 50 is operable due to the stable supply from the SBC 36.

The battery system 10 comprises a relay driver 60. The relay driver 60 is configured to control at least one relay 62, 64 to perform a switching operation. In the present example, two relays 62, 64 are disclosed, but the invention is not restricted thereto. The switching operation can be a switching of a terminal voltage of a battery 110 or battery pack, for example, to set a corresponding power line 114 non-conductive or conductive. However, also other switching operations may be performed by the relay driver 60.

The relay driver 60 is connected to an output node 34 of the DC/DC converter 32. The output node 34 is interconnected between the SBC 36 and the DC/DC converter 32 to receive the output voltage from the DC/DC converter 32. The output voltage of the DC/DC converter 32 serves as power supply for the relay driver 60.

The microcontroller 50 is electrically connected to the relay driver 60 through a control line 56 to control the relay driver 60 by control signals transmitted to the relay driver 60. The relay driver 60 may also transmit diagnosis signals through a diagnosis line 58 to transmit state information to the microcontroller 50.

The microcontroller 50 is further electrically connected to the DC/DC converter 32. Therefore, the microcontroller 50, through a control line 52, controls the DC/DC converter 32 as explained in more detail below.

The microcontroller 50 may identify that the at least one relay 62, 64 needs to be switched. For example, the microcontroller 50 receives an external signal indicative of that the at least one relay 62, 64 needs to be switched, for example, received from a vehicle control. In other examples, the microcontroller 50 may identify, based on received state signals obtained from a monitoring unit, e.g. various sensors that supervise operation-relevant parameters of the battery, to switch the at least one relay 62, 64.

Before a switching operation is performed, the microcontroller 50 controls, through the control line 52, the DC/DC converter 32 to increase the output voltage of the DC/DC converter 32. In detail, the microcontroller 50 controls the DC/DC converter 32 to increase the output voltage from a first voltage V1 to a second voltage V2 higher than the first voltage V1. This is schematically illustrated in Fig. 2. Then, instead of the first voltage V1, the second voltage V2 is supplied to the output node 34 and therefore also to the relay driver 60.

Then, the microcontroller 50 is configured to control the relay driver 60, through control line 56, to switch the at least one relay 62, 64 while the second voltage V2 is outputted by the DC/DC converter 32. The microcontroller 50 can, for example, receive a diagnostic signal through diagnostic line 58 indicative of that the relay driver 60 is receiving the second voltage V2. Therefore, higher power is provided to the relay driver 60 to perform the switching operation compared to the power provided at times where no switching operation is performed, i.e. when the at least one relay 62, 64 is held closed or held open.

The microcontroller 50 further controls the DC/DC converter 32 to output the second voltage V2 until the at least one relay 62, 64 is switched. Here, the microcontroller 50 can for example receive a diagnostic signal through diagnostic line 58 indicative of that the at least one relay 62, 64 is switched, i.e. that the switching operation is completed.

Then, after the switching operation is completed, the microcontroller 50 controls the DC/DC converter 32 to reduce the output voltage from the second voltage V2 to the first voltage V1. Thus, the increase of the output voltage is transient/temporary such that the time of increased power is relatively short and thus an effective reduction of power consumption and self-heating is achieved without the use of a PWM controller.

The first and second voltages V1, V2 may be set to reduce the power consumption. In particular, the first voltage V1 can be lower than a minimum voltage required to switch the at least one relay 62, 64. Additionally, the second voltage V2 is equal or higher than a minimum voltage required to switch the at least one relay 62, 64. In particular, the first voltage V1 is equal or higher than a minimum operating voltage for the SBC 36 and also for the microcontroller 50. Thus, PWM control becomes obsolete.

For example, a second voltage V2 may be between 10V and 12V and a first voltage V1 may be between 6V and 8V. When the first voltage V1 is within this preferred range, the SBC 36 still receives sufficient amount of power to be operable. Further, this amount of power is also sufficient to stably supply the microcontroller 50 which generally requires between 3.3 V and 5V. In addition, the second voltage V2 is then sufficient for the relay driver 60 to operate the at least one relays 62, 64.

Further, several additional power consumers 70, 80 can be integrated and provided with power through either the DC/DC converter 32 or the SBC 36. In an example, a first power consumer 70 is electrically connected to an output node 38 of the SBC 36 to receive the output voltage from the SBC 36. This is preferred since the SBC 36 can stably output a voltage despite of the transient output voltage increase of the DC/DC converter 32 during switching.

Further, a second power consumer 80 can also be connected to the output node 34 of the DC/DC converter 32. In such case, the second power consumer 80 may be configured to be robust with respect to the transient voltage increase during switching operation times.

In a further alternative, a power consumer may also be directly connected to the power source 20 has to be configured to be operable when using the unregulated voltage.

In Fig. 2, a method for operating the battery system 10 is schematically shown in terms of a time diagram. The method is performed by a battery system 10 according to one of the above embodiments.

Initially, a first voltage V1 is supplied to the relay driver 60. In this time, the at least one relay 62, 64 is held in a closed state or an open state by the relay driver 60. For example, the first voltage V1 may be between 6V and 8V. This first voltage V1 may be sufficient for the relay driver 60 to hold/keep the at least one relay closed or opened. In particular, the first voltage V1 can be lower than a minimum voltage required to switch the at least one relay 62, 64 in order to save power consumption during times in which no switching operation is performed. The first voltage V1 may be set so that the SBC 36 receives sufficient amount of power to be operable. In particular, the first voltage V1 is set such that the SBC 36 stably supplies the microcontroller 50 and/or other components. The first voltage V1 therefore can be equal or higher than a minimum operating voltage of the microcontroller 50.

The microcontroller 50 may identify that the at least one relay needs to be switched. Before switching the at least one relay 62, 64, the method comprises to control the DC/DC converter to increase S100 the output voltage from a first voltage V1 to a second voltage V2 higher than the first voltage V1. The second voltage V2 can be equal or higher than a minimum voltage required to switch the at least one relay 62, 64. For example, a second voltage V2 may be between 10V and 12V.

In a further step, the method comprises to control the relay driver, by the microcontroller, to switch S110 the at least one relay while the second voltage V2 is outputted by the DC/DC converter. The switching may occur after confirming, e.g. through the diagnostic line, that the relay driver 60 receives the second voltage V2.

In a further step, the method comprises to control, by the microcontroller, the DC/DC converter to output the second voltage V2 until the at least one relay is switched. Further, the method comprises the step of controlling, by the microcontroller, the DC/DC converter to reduce S120 the output voltage V2 from the second voltage V2 to the first voltage V1 in response to when the switching of the at least one relay is completed. Also, a confirming diagnostic signal indicative of switching completion through the diagnostic line may be transmitted to the microcontroller through the diagnostic lines. A reduced power consumption and reduced self-heating is provided by the method and the battery system, since before switching the relay a lower voltage is supplied and only for the switching operation this supply voltage is increased. Further, relay driver design is less complex compared to PWM and no EMC measures need to be provided.

### Reference signs

- 10: battery system

- 20: power source

- 30: battery management system (BMS)
- 32: DC/DC converter
- 34: output node
- 36: system basis chip (SBC)
- 38: output node

- 50: microcontroller
- 52: control line
- 54: diagnosis line
- 56: control line
- 58: diagnosis line

- 60: relay driver
- 62: relay
- 64: relay

- 70: first power consumer
- 80: second power consumer

- 110: battery/battery pack
- 114: power line

- S100: increase output voltage
- S110: switch the at least one relay
- S120: reduce output voltage

## Claims

1. A battery system (10), comprising:
a power source (20);
a battery management system (30), BMS, including a DC/DC converter (32) and a system basis chip (36), SBC;
the DC/DC converter (32) is electrically connected to the power source (20) to receive power from the power source (20) and configured to output an output voltage;
the SBC (36) is electrically connected in series with the DC/DC converter (32) to receive the output voltage from the DC/DC converter (32);
a microcontroller (50) connected to the SBC (40) to receive power from the SBC (40);
a relay driver (60) configured to control at least one relay (62, 64), wherein the relay driver (60) is connected to an output node (34) of the DC/DC converter (32) which is interconnected between the SBC (40) and the DC/DC converter (32) to receive the output voltage from the DC/DC converter (32);
wherein the microcontroller (50) is electrically connected to the relay driver (60) and configured to:
before switching the at least one relay (62, 64), control the DC/DC converter (32) to increase the output voltage from a first voltage (V1) to a second voltage (V2) higher than the first voltage (V1); and
control the relay driver (60) to switch the at least one relay (62, 64) while the second voltage (V2) is outputted by the DC/DC converter (32).

2. The battery system (10) of claim 1, wherein the microcontroller (50) is configured to:
control the DC/DC converter (32) to output the second voltage (V2) until the at least one relay (62, 64) is switched; and
control the DC/DC converter (32) to reduce the output voltage from the second voltage (V2) to the first voltage (V1) in response to when the switching of the at least one relay (62, 64) is completed.

3. The battery system (10) of one of the claims 1 to 2, further comprising at least one additional power consumer (70) which is electrically connected to an output node (38) of the SBC (36) to receive the output voltage from the SBC (40).

4. The battery system (10) of claims 1 to 3, wherein the first voltage (V1) is lower than a minimum voltage required to switch the at least one relay (62, 64).

5. The battery system (10) of one of the claims 1 to 4, wherein the second voltage (V2) is equal or higher than a minimum voltage required to switch the at least one relay (62, 64).

6. The battery system (10) of one of the claims 1 to 5, wherein the first voltage (V1) is equal or higher than a minimum operating voltage of the microcontroller (50).

7. A vehicle comprising the battery system (10) according to claim 6.

8. A stationary energy storage system comprising the battery system (10) according to claim 6.

9. A method for operating the battery system (10) according to one of the claims 1 to 6, wherein the method comprises the steps of:
before switching the at least one relay, control, by the microcontroller, the DC/DC converter to increase (S100) the output voltage from a first voltage (V1) to a second voltage (V2) higher than the first voltage (V1); and
control the relay driver, by the microcontroller, to switch (S110) the at least one relay while the second voltage (V2) is outputted by the DC/DC converter.

10. The method of claim 9, further comprising to control, by the microcontroller, the DC/DC converter to output the second voltage (V2) until the at least one relay (62, 64) is switched; and
control, by the microcontroller, the DC/DC converter to reduce (S120) the output voltage from the second voltage (V2) to the first voltage (V1) in response to when the switching of the at least one relay is completed.

## Amended claims

### Amended claims in accordance with Rule 137(2) EPC.

1. A battery system (10), comprising:
a power source (20);
a battery management system (30), BMS, including a DC/DC converter (32);
the DC/DC converter (32) is electrically connected to the power source (20) to receive power from the power source (20) and configured to output an output voltage;
a relay driver (60) configured to control at least one relay (62, 64), wherein the relay driver (60) is connected to an output node (34) of the DC/DC converter (32) to receive the output voltage from the DC/DC converter (32);
**characterized in**,
the BSM (30) including a system base chip (36), SBC, electrically connected to the output node (34) to receive the output voltage from the DC/DC converter (32);
a microcontroller (50) connected to the SBC (36) to receive power from the SBC (36);
wherein the microcontroller (50) is electrically connected to the relay driver (60) and configured to:
before switching the at least one relay (62, 64), control the DC/DC converter (32) to increase the output voltage from a first voltage (V1) to a second voltage (V2) higher than the first voltage (V1); and
control the relay driver (60) to switch the at least one relay (62, 64) while the second voltage (V2) is outputted by the DC/DC converter (32).

2. The battery system (10) of claim 1, wherein the microcontroller (50) is configured to:
control the DC/DC converter (32) to output the second voltage (V2) until the at least one relay (62, 64) is switched; and
control the DC/DC converter (32) to reduce the output voltage from the second voltage (V2) to the first voltage (V1) in response to when the switching of the at least one relay (62, 64) is completed.

3. The battery system (10) of one of the claims 1 to 2, further comprising at least one additional power consumer (70) which is electrically connected to an output node (38) of the SBC (36) to receive the output voltage from the SBC (36).

4. The battery system (10) of claims 1 to 3, wherein the first voltage (V1) is lower than a minimum voltage required to switch the at least one relay (62, 64).

5. The battery system (10) of one of the claims 1 to 4, wherein the second voltage (V2) is equal or higher than a minimum voltage required to switch the at least one relay (62, 64).

6. The battery system (10) of one of the claims 1 to 5, wherein the first voltage (V1) is equal or higher than a minimum operating voltage of the microcontroller (50).

7. A vehicle comprising the battery system (10) according to claim 6.

8. A stationary energy storage system comprising the battery system (10) according to claim 6.

9. A method for operating the battery system (10) according to one of the claims 1 to 6, wherein the method comprises the steps of:
before switching the at least one relay, control, by the microcontroller, the DC/DC converter to increase (S100) the output voltage from a first voltage (V1) to a second voltage (V2) higher than the first voltage (V1); and
control the relay driver, by the microcontroller, to switch (S110) the at least one relay while the second voltage (V2) is outputted by the DC/DC converter.

10. The method of claim 9, further comprising to control, by the microcontroller, the DC/DC converter to output the second voltage (V2) until the at least one relay (62, 64) is switched; and
control, by the microcontroller, the DC/DC converter to reduce (S120) the output voltage from the second voltage (V2) to the first voltage (V1) in response to when the switching of the at least one relay is completed.
